# EUROPÄISCHE PATENTSCHRIFT

(11) **EP 3 625 104 B1**
(45) Veröffentlichungstag und Bekanntmachung des Hinweises auf die Patenterteilung: **07.04.2021**
(21) Anmeldenummer: 18722081.9
(22) Anmeldetag: 11.05.2018
(51) Int. Cl.: B61L 23/04, B61L 25/02, B05B 9/04, B05B 9/06, E01H 11/00

(54) **UNKRAUTBEKÄMPFUNG BEI HOHER GESCHWINDIGKEIT**
WEED CONTROL AT HIGH SPEED
LUTTE CONTRE LES MAUVAISES HERBES À HAUTE VITESSE

(30) Priorität: 17.05.2017 EP 17171521
(43) Veröffentlichungstag der Anmeldung: 25.03.2020
(73) Patentinhaber: Bayer Aktiengesellschaft, 51373 Leverkusen (DE)
(72) Erfinder: BASSFELD, Hinnerk, 49536 Lienen (DE)
(74) Vertreter: BIP Patents
(86) Internationale Anmeldenummer: PCT/EP2018/062271
(87) Internationale Veröffentlichungsnummer: WO 2018/210702

(56) Entgegenhaltungen:
- EP-B1- 1 521 885
- DE-U1- 8 911 198
- GB-A- 2 327 231
- US-A- 2 485 391
- US-A- 4 230 280
- US-A- 5 768 823
- US-A1- 2009 226 036

## Beschreibung

Die vorliegende Erfindung befasst sich mit dem technischen Gebiet der Unkrautbekämpfung mittels eines sich bewegenden Schienenfahrzeugs. Gegenstand der Erfindung sind eine Vorrichtung und ein Verfahren zur Erhöhung der Bewegungsgeschwindigkeit des Schienenfahrzeugs während der Durchführung von Maßnahmen zur Bekämpfung von Unkraut auf Gleisanlagen. Ein weiterer Gegenstand der vorliegenden Erfindung ist ein mit entsprechenden Mitteln ausgestattetes Schienenfahrzeug.

Die Bekämpfung von Pflanzen auf Gleisanlagen ist aus Sicherheitsgründen unbedingt erforderlich. Insbesondere das Schotterbett muss von Pflanzenbewuchs befreit und/oder freigehalten werden. Das Schotterbett ist üblicherweise flexibel und hilft sowohl statische als auch dynamische Belastungen gleichmäßig auf den Unterbau zu übertragen. Die unzähligen Hohlräume zwischen den einzelnen Steinen federn das enorme Gewicht von fahrenden Zügen und die Stöße wie ein Puffer ab.

Pflanzen sowie der durch sie festgehaltene Humus können die Zwischenräume mit der Zeit verstopfen, was die Sicherheit der Züge erheblich gefährden kann. Aus Sicherheitsgründen muss deshalb Bewuchs aller Art von den Gleisanlagen ferngehalten werden.

Üblicherweise wird Pflanzenwachstum auf Gleisanlagen durch das Ausbringen von Herbiziden verhindert. So genannte Spritzzüge sind Spezialzüge zur Streckenpflege von Schienenbahnen. Sie dienen dem Ausbringen von Herbiziden, damit das Schotterbett nicht verkrautet.

Die Menge an ausgebrachten Herbiziden sollte sowohl aus Umweltschutzgründen als auch aus Kostengründen möglichst gering gehalten werden. Kamera-Systeme mit einer angeschlossenen Bildanalyse können eingesetzt werden, um Pflanzen im Gleisbett zu erkennen und gezielt zu bekämpfen. EP1521885B1 offenbart beispielsweise eine Vorrichtung zur Unkrautbekämpfung für ein Schienenfahrzeug, welche eine Unkraut erkennende Kamera umfasst, die mit einem Unkraut erkennenden Computer verbunden ist. Die beschriebene Vorrichtung kann eingesetzt werden, um ausschließlich diejenigen Streckenabschnitte, bei denen ein Unkrautbewuchs mittels Kamera und Computer festgestellt worden ist, mit Herbizid zu behandeln. Streckenabschnitte, die frei von Unkraut sind, müssen nicht behandelt werden.

Üblicherweise weisen die Komponenten, die zur Bekämpfung von Unkräutern in einem Spritzzug eingesetzt werden, eine gewisse Trägheit auf. Das Kamera-System mit angeschlossener Bildanalytik benötigt eine gewisse Zeit, um die während der Fahrt aufgenommenen Bilder zu analysieren. Weitere Zeit wird benötigt, um Pumpen und Ventile zum Ausbringen von Herbizid anzusteuern. Ferner muss eine Mindestmenge an Herbizid pro Fläche ausgebracht werden, um die gewünschte Wirkung zu erzielen; je schneller der Zug fährt, desto schneller muss diese Menge bereitgestellt und möglichst genau appliziert werden. Eine hohe Geschwindigkeit des Zugs kann dazu führen, dass ausgebrachte Herbizidmengen verwirbelt werden und nicht dort hingelangen, wo sie hingelangen sollen.

All dies führt dazu, dass ein Spritzzug üblicherweise mit einer geringen Geschwindigkeit von etwa 20 km/h betrieben wird. In der Zeit, in der sich ein Spritzzug auf einem Streckenabschnitt befindet, kann sich kein anderer Zug mit einer höheren Geschwindigkeit dort bewegen. Ein langsam fahrender Spritzzug führt daher zu einer gewissen Blockierung von Streckenabschnitten.

Ausgehend vom beschriebenen Stand der Technik bestand die objektive technische Aufgabe darin, die Zeit für die Bekämpfung von Unkräutern auf Gleisanlagen zu reduzieren.

Erfindungsgemäß wird diese Aufgabe durch die Gegenstände der unabhängigen Ansprüche 1, 7 und 15 gelöst. Bevorzugte Ausführungsformen finden sich in den abhängigen Ansprüchen sowie in der vorliegenden Beschreibung.

Ein erster Gegenstand der vorliegenden Erfindung ist eine Vorrichtung zur Unkrautbekämpfung gemäß Anspruch 1 für ein Schienenfahrzeug.

Ein weiterer Gegenstand der vorliegenden Erfindung ist ein Verfahren gemäß Anspruch 7.

Dabei ist vorgesehen, dass Mittel zum Identifizieren des mindestens einen Ortes und/oder Bekämpfungsmittel zur Durchführung der Maßnahme zur Unkrautbekämpfung an dem mindestens einen Ort während des Bewegens des Schienenfahrzeugs eine Bewegung ausführen, die der Bewegungsrichtung des Schienenfahrzeugs entgegengesetzt ist, um die Relativgeschwindigkeit zwischen den Mitteln zum Identifizieren und/oder den Bewegungsmitteln und dem mindestens einen Ort zu reduzieren.

Ein weiterer Gegenstand der vorliegenden Erfindung ist ein Schienenfahrzeug gemäß Anspruch 15 umfassend eine oder mehrere erfindungsgemäße Vorrichtungen gemäß Anspruch 1. Die Erfindung wird nachstehend näher erläutert, ohne zwischen den Erfindungsgegenständen (Vorrichtung, Verfahren, Schienenfahrzeug) zu unterscheiden. Die nachfolgenden Erläuterungen sollen vielmehr für alle Erfindungsgegenstände in analoger Weise gelten, unabhängig davon, in welchem Kontext (Vorrichtung, Verfahren, Schienenfahrzeug) sie erfolgen.

Die Erfindung dient zur Bekämpfung von Unkraut unter Einsatz eines sich bewegenden Schienenfahrzeuges.

Unter dem Begriff "Unkraut" (Mehrzahl: Unkräuter) werden Pflanzen in Gleisanlagen verstanden, die dort z.B. aus dem Samenpotential des Bodens oder über Zuflug zur Entwicklung kommen. Der Begriff ist nicht auf Kräuter im eigentlichen Sinne beschränkt, sondern umfasst auch Gräser, Farne, Moose oder holzige Pflanzen.

Da das Unkraut ein Sicherheitsrisiko für die Schienenfahrzeuge und die darin befindlichen Menschen, Tiere und/oder Güter darstellt, soll es bekämpft werden.

Unter dem Begriff "Bekämpfung" werden alle Maßnahmen zur Verhinderung des Aufkommens und/oder der Ausbreitung sowie Maßnahmen zur Reduzierung von Unkräutern verstanden.

Unter dem Begriff "Schienenfahrzeug" wird jedes Fahrzeug verstanden, das sich durch Antriebsmittel auf Schienen entlang einer Strecke von einem Ort zu einem anderen Ort bewegen kann. Vorzugsweise handelt es sich bei dem Schienenfahrzeug um einen Zug (z.B. einen Spritzzug) oder einen Unimog. Vorzugsweise kann sich das Schienenfahrzeug mittels der Antriebsmittel mit einer Geschwindigkeit von mindestens 30 km/h, vorzugsweise mindestens 40 km/h, noch mehr bevorzugt mindestens 50 km/h bewegen.

Zur Bekämpfung von Unkraut verfügt das Schienenfahrzeug über Identifikationsmittel und Bekämpfungsmittel. Die Identifikationsmittel dienen dazu, mindestens einen Ort zu identifizieren, an dem eine Maßnahme zur Bekämpfung von Unkraut durchgeführt werden soll. Die Bekämpfungsmittel dienen dazu, eine Maßnahme zur Bekämpfung von Unkraut durchzuführen. Identifikationsmittel und/oder Bekämpfungsmittel sind an dem Schienenfahrzeug so angebracht, dass sie eine Bewegung in eine Richtung ausführen können, die der Bewegungsrichtung des Schienenfahrzeugs entgegengesetzt ist. Nachfolgend werden solche Bekämpfungsmittel und/oder Identifikationsmittel auch als bewegliche Bekämpfungsmittel und/oder bewegliche Identifikationsmittel bezeichnet.

Das sich in eine Richtung bewegende Schienenfahrzeug führt eine Relativbewegung gegenüber der ruhenden Gleisanlage und den darin befindlichen Pflanzen aus. Durch die Bewegung der beweglich ausgeführten Bekämpfungsmittel und/oder Identifikationsmittel in die entgegengesetzte Richtung wird die Relativgeschwindigkeit der Bekämpfungsmittel und/oder Identifikationsmittel gegenüber der ruhenden Gleisanlage bzw. den darin befindlichen Pflanzen reduziert. Bewegen sich die Bekämpfungsmittel und/oder Identifikationsmittel mit der gleichen Geschwindigkeit wie das Schienenfahrzeug, wird 100% der Fahrtgeschwindigkeit kompensiert. Vorzugsweise liegt die Kompensation der Fahrtgeschwindigkeit im Bereich von 10% bis 90%, noch mehr bevorzugt im Bereich von 20% bis 80%.

In einer Ausführungsform fährt das Schienenfahrzeug in eine Richtung, während die Bekämpfungsmittel eine Bewegung in die entgegengesetzte Richtung ausführen und dabei eine Maßnahme zur Bekämpfung von Unkraut durchführen.

In einer weiteren Ausführungsform fährt das Schienenfahrzeug in eine Richtung, während die Identifikationsmittel eine Bewegung in die entgegengesetzte Richtung ausführen und dabei Orte identifizieren, an denen eine Maßnahme zur Bekämpfung von Unkraut durchzuführen ist.

In einer weiteren Ausführungsform fährt das Schienenfahrzeug in eine Richtung, während die Identifikationsmittel eine Bewegung in die entgegengesetzte Richtung ausführen und dabei Orte identifizieren, an denen eine Maßnahme zur Bekämpfung von Unkraut durchzuführen ist, und die Bekämpfungsmittel ebenfalls eine Bewegung in die entgegengesetzte Richtung ausführen und dabei eine Maßnahme zur Bekämpfung von Unkraut an den identifizierten Orten ausführen.

In einer Ausführungsform der vorliegenden Erfindung erfolgt die Unkrautbekämpfung durch Ausbringen eines oder mehrerer Herbizide. Dabei kann es sich um selektive Herbizide handeln, die gezielt bestimmte Pflanzen abtöten, oder um so genannte Totalherbizide handeln, die gegen sehr viele Pflanzen wirken. Auch eine Kombination von selektiven und Totalherbiziden ist denkbar. Die vorzugsweise beweglichen Bekämpfungsmittel sind vorzugsweise Sprühdüsen, die über zumindest partiell flexible Leitungen mit einem Behälter mit einer Herbizidformulierung verbunden sind.

In einer weiteren Ausführungsform der vorliegenden Erfindung erfolgt die Unkrautbekämpfung durch Abflämmen. Bei den vorzugsweise beweglich ausgeführten Bekämpfungsmitteln handelt es sich vorzugsweise um eine oder mehrere Düsen, aus denen ein brennbares Material austreten kann, das mittels einer Zündvorrichtung zum Brennen gebracht werden kann.

In einer weiteren Ausführungsform der vorliegenden Erfindung erfolgt die Unkrautbekämpfung durch Vereisen, beispielsweise durch Ausbringen von Flüssigstickstoff. Bei den vorzugsweise beweglich ausgeführten Bekämpfungsmitteln handelt es sich vorzugsweise um eine oder mehrere Düsen, aus denen Flüssigstickstoff ausgebracht werden kann.

In einer weiteren Ausführungsform der vorliegenden Erfindung erfolgt die Unkrautbekämpfung durch Einwirkung elektromagnetischer Strahlung, beispielsweise durch Röntgenstrahlung Ultraviolettstrahlung, Infrarotstrahlung, Mikrowellenstrahlung oder stark gebündelter sichtbarer Strahlung z.B. mittels Laserstrahlung. Bei den vorzugsweise beweglich ausgeführten Bekämpfungsmitteln handelt es sich vorzugsweise um Mittel zum Aussenden von Strahlung in Richtung von Pflanzen, die sich auf der Gleisanlage befinden. Bei diesen Mitteln kann es sich um Strahlungsquellen für elektromagnetische Strahlung handeln. Es ist aber auch denkbar, dass es sich um Mittel handelt, mit denen elektromagnetische Strahlung in eine definierte Richtung geleitet wird, wie beispielsweise um Spiegel, Linsen und/oder Prismen oder dergleichen.

In einer weiteren Ausführungsform der vorliegenden Erfindung erfolgt die Unkrautbekämpfung durch die Anwendung von Strom. Bei den vorzugsweise beweglich ausgeführten Bekämpfungsmitteln handelt es sich vorzugsweise um Elektroden, durch die bei Kontakt mit einer Pflanze ein elektrischer Strom zum Fließen gebracht werden kann, der zumindest teilweise durch Teile der Pflanze fließt.

Denkbar ist auch eine Kombination von zwei oder mehreren der genannten Unkrautbekämpfungsmaßnahmen.

Die Maßnahmen zur Unkrautbekämpfung werden während der Fahrt eines Schienenfahrzeugs entlang einer Strecke vorgenommen.

Vorzugsweise erfolgt die Bekämpfung von Unkraut bei einer Geschwindigkeit von mindestens 30 km/h, vorzugsweise mindestens 40 km/h, noch mehr bevorzugt mindestens 50 km/h.

Es ist denkbar, dass eine Unkrautbekämpfungsmaßnahme eine gewisse Zeit in Anspruch nimmt. Es ist zum Beispiel denkbar, dass eine Mindestenergie in Form von elektrischer Energie oder thermischer Energie oder elektromagnetischer Energie in eine Pflanze eingebracht werden muss, um diese abzutöten. Es ist denkbar, dass zum Erreichen dieser Mindestenergie z.B. eine Mindestkontaktzeit zwischen der Pflanze und einer Elektrode eingehalten werden muss. Es ist auch denkbar, dass zum Erreichen der Mindestenergie die Pflanze z.B. einer Mindestdauer einer Strahlung ausgesetzt sein muss. Es ist auch denkbar, dass Ventile eine gewisse Zeit zum Öffnen benötigen und Herbizide eine gewisse Zeit benötigen, um aus einer Düse ausgetrieben zu werden.

Ferner ist es denkbar, dass die durch das fahrende Schienenfahrzeug resultierende hohe Relativgeschwindigkeit zwischen Bekämpfungsmittel und Unkraut einen negativen Einfluss auf die Bekämpfungsmaßnahme ausübt. Es ist zum Beispiel denkbar, dass der mit der Geschwindigkeit des Schienenfahrzeugs zunehmende Fahrtwind zu einer ungewünschten Verteilung des versprühten Herbizids führt.

Erfindungsgemäß wird daher die Relativgeschwindigkeit zwischen dem Bekämpfungsmittel und dem zu bekämpfenden Unkraut durch eine Bewegung der Bekämpfungsmittel entgegengesetzt zur Bewegungsrichtung des Schienenfahrzeugs reduziert.

Es ist zum Beispiel denkbar, dass die Bekämpfungsmittel beweglich an einer Schiene am Schienenfahrzeug gelagert sind. Während sich das Schienenfahrzeug in eine Richtung bewegt (z.B. nach "vorne"), können sich die an der Schiene gelagerten Bekämpfungsmittel an der Schiene zum Beispiel motorgetrieben in die entgegengesetzte Richtung (nach "hinten") bewegen und bei dieser Bewegung eine Maßnahme zur Unkrautbekämpfung ausüben.

Es ist denkbar, dass die Schiene in sich geschlossen ist und nach einer Wegstrecke, entlang der die Bekämpfungsmaßnahme ausgeführt wird, wieder zurück an den Anfang führt. Die Schiene könnte zum Beispiel in Form einer "langgestreckten Null" ausgeführt sein. Eine "langgestreckte Null" weist zwei parallele Geradenabschnitte auf, die über zwei vorzugsweise halbkreisförmige Bögen miteinander verbunden sind. Auf einem der Geradenabschnitte bewegen sich die Bekämpfungsmittel entgegengesetzt zur Bewegungsrichtung des Schienenfahrzeugs und führen dabei eine Bekämpfungsmaßnahme aus. Dann werden sie über den ersten Bogen auf den zweiten Geradenabschnitt geführt und bewegen sich auf dem zweiten Geradenabschnitt in die gleiche Richtung wie das Schienenfahrzeug. Vorzugsweise führen sie während dieser Bewegung in Fahrtrichtung keine Bekämpfungsmaßnahme aus. Dann gelangen sie auf den zweiten Bogen und werden durch den zweiten Bogen wieder auf den ersten Geradenabschnitt geführt.

Es können mehrere Bekämpfungsmittel an der in sich geschlossenen Schiene geführt werden, so dass sich immer mindestens ein Bekämpfungsmittel auf einem Geradenabschnitt befindet, auf dem sich das Bekämpfungsmittel entgegengesetzt zur Fahrtrichtung des Schienenfahrzeugs bewegt. Auf diese Weise ist stets mindestens ein Bekämpfungsmittel im Einsatz.

Es ist auch denkbar, die Bekämpfungsmittel an einem umlaufenden Träger befestigt sind, wie er beispielsweise bei Kettenfahrzeugen oder Rolltreppen bekannt ist.

Neben der lateralen Bewegung des Bekämpfungsmittels ist auch eine Schwenkbewegung denkbar. Es ist zum Beispiel denkbar, eine Quelle für elektromagnetische Strahlung während der Fahrt des Schienenfahrzeugs entgegen der Fahrtrichtung zu schwenken, so dass zum Beispiel ein Bereich des Gleisbetts unterhalb des Schienenfahrzeugs während der Schwenkdauer bestrahlt wird. Es ist denkbar, mehrere hin und her schwenkende Bekämpfungsmittel parallel einzusetzen, so dass immer mindestens ein Bekämpfungsmittel eine Schwenkbewegung entgegengesetzt zur Fahrtrichtung des Schienenfahrzeugs vornimmt. Denkbar ist auch eine Rotationsbewegung anstelle einer Schwenkbewegung.

Die Unkrautbekämpfung wird an einem oder mehreren Orten entlang der Strecke durchgeführt, für den/die eine Unkrautbekämpfung angezeigt worden ist.

Es wird also zunächst ein Ort bestimmt (identifiziert), an der eine Unkrautbekämpfung erfolgen soll und dann erfolgt die entsprechende Unkrautbekämpfung an diesem Ort. Anschließend kann ein weiterer Ort entlang der Strecke bestimmt (identifiziert) werden, und es erfolgt eine entsprechende Unkrautbekämpfung an dem weiteren Ort. Ein Ort ist üblicherweise ein Streckenabschnitt, bei dem Unkräuter entdeckt worden sind und/oder ein Streckenabschnitt, bei dem ein Risiko für ein Auftreten von Unkräutern besteht.

In einer Ausführungsform der vorliegenden Erfindung erfolgt das Identifizieren eines Ortes durch ein Kamera-System, das mit Mitteln zur Bildanalyse ausgestattet ist. Das Kamera-System (oder Teile davon, wie beispielsweise die Kamera-Optik) ist an dem Schienenfahrzeug (ggf. beweglich) befestigt und nimmt während der Fahrt Bilder von der Gleisanlage auf. Die aufgenommenen Bilder werden auf die Anwesenheit von Pflanzen oder Pflanzenteilen analysiert. Wird in einem Bild eine Pflanze erkannt, so wird der Ort, an dem das Bild aufgenommen worden ist und an dem sich die Pflanze befindet, als ein Ort bestimmt (identifiziert), an dem eine Unkrautbekämpfung erfolgen soll.

Es ist denkbar, dass durch das Kamera-System Pflanzen als solche erkannt werden. Es ist aber auch denkbar, dass das Kamera-System so ausgeführt ist, dass es einzelne Pflanzenspezies identifizieren kann.

Zur Aufnahme eines Bildes von einem Objekt wird Licht, das auf das Objekt fällt und zurückgeworfen (reflektiert/gestreut) wird, von einem Bildsensor (z.B. CCD-Sensor, CMOS-Sensor) erfasst und in elektrische Signale umgewandelt. Im vorliegenden Fall werden Bilder der Umgebung eines Schienenfahrzeugs erzeugt, während sich das Schienenfahrzeug mit einer relativen Geschwindigkeit gegenüber der Umgebung bewegt. Um Bewegungsunschärfe zu vermeiden, muss die Belichtungszeit an die Geschwindigkeit angepasst werden. Je größer die Relativgeschwindigkeit ist, desto geringer ist die maximale Belichtungszeit, die nicht überschritten werden darf, um eine vorgegebene (tolerierbare) Bewegungsunschärfe einzuhalten.

Eine geringere Belichtungszeit kann beispielsweise durch eine höhere Lichtmenge kompensiert werden. In einer Ausführungsform der vorliegenden Erfindung wird eine höhere Geschwindigkeit des Schienenfahrzeugs durch eine Relativbewegung der Kamera entgegengesetzt zur Bewegungsrichtung des Schienenfahrzeugs kompensiert. Dazu kann die Kamera beispielsweise an einer Schiene am Schienenfahrzeug beweglich gelagert sein. Während das Schienenfahrzeug in die eine Richtung fährt, wird die Kamera zum Beispiel angetrieben durch einen Motor in die entgegengesetzte Richtung bewegt, um die Relativgeschwindigkeit zwischen Kamera und Umgebung des Schienenfahrzeugs (z.B. Gleisbett) zu reduzieren.

Es ist denkbar, dass die Kamera bei der Bewegung eine Wegstrecke entgegen der Bewegungsrichtung des Schienenfahrzeugs zurücklegt und bei dieser Bewegung mehrere Bildaufnahmen von der Umgebung (z.B. dem Gleisbett) erzeugt. Anschließend wird die Kamera wieder an ihren Ursprungsort zurückbewegt. Während dieser Zurückbewegung ist die Relativgeschwindigkeit zwischen der Kamera und der Umgebung des Schienenfahrzeugs natürlich größer als die Relativgeschwindigkeit zwischen Schienenfahrzeug und Umgebung. Während dieser Zurückbewegung werden daher vorzugsweise keine Bildaufnahmen von der Umgebung erzeugt. Damit das Schienenfahrzeug während dieser Zurückbewegung aber nicht "blind" ist, kann mindestens eine weitere Kamera eingesetzt werden, die sich mit der ersten Kamera bei der Erzeugung von Bildaufnahmen abwechselt.

Neben der lateralen Bewegung der Kamera(s) ist auch eine Schwenkbewegung denkbar. Denkbar ist zum Beispiel, dass für die Erkennung von Unkraut oder der vorliegenden Unkrautspezies mehrere Bilder von dem Objekt, das als Unkraut erkannt oder spezifiziert werden soll, aus unterschiedlichen Betrachtungswinkeln aufgenommen werden. Denkbar ist zum Beispiel, dass in einem ersten Bild, das von einer Kamera aus einem Blickwinkel aufgenommen worden ist, ein Objekt erkannt wird, das beispielsweise eine grüne Farbe aufweist. Bekanntermaßen weisen viele Pflanzen zumindest teilweise eine grüne Farbe auf, die auf das Vorhandensein von Chlorophyll zurückzuführen ist. Es ist denkbar, dass zur Sicherstellung, dass es sich bei dem grünen Objekt um eine Pflanze handelt oder zur Identifizierung der vorliegenden Pflanzenspezies die Kamera einen Schwenk entgegen der Fahrtrichtung des Schienenfahrzeugs vornimmt, um mindestens eine weitere Bildaufnahme von dem Objekt unter einem anderen Blickwinkel zu erzeugen. Es ist auch denkbar, dass aus einer Mehrzahl von Bildaufnahmen aus unterschiedlichen Blickwinkeln eine dreidimensionale Reproduktion des Objekts erzeugt wird. Je mehr Bildaufnahmen von einem Objekt aus unterschiedlichen Blickwinkeln erzeugt werden, desto höher ist üblicherweise die Genauigkeit bei der Identifizierung des Objekts.

In einer weiteren Ausführungsform der vorliegenden Erfindung wird der mindestens eine Ort, an dem eine Unkrautbekämpfung erfolgen soll, nicht während der Fahrt des Schienenfahrzeugs sondern vorab bestimmt, und während der Fahrt des Schienenfahrzeugs das Erreichen des vorab bestimmten Ortes (lediglich) angezeigt. Es ist zum Beispiel denkbar, dass Fernerkundungsdaten verwendet werden, um Orte entlang von Schienenstrecken zu identifizieren, an denen Unkraut wächst.

Fernerkundungsdaten sind digitale Informationen, die aus der Ferne beispielsweise durch Satelliten von der Erdoberfläche gewonnen werden. Auch der Einsatz von Luftfahrzeugen (unbemannt (Drohnen) oder bemannt) zur Aufnahme von Fernerkundungsdaten ist denkbar.

Es ist denkbar, dass Fernerkundungsdaten auf die Anwesenheit von Unkraut im Bereich des Streckennetzes eines Bahnbetreibers analysiert werden und die Geokoordinaten von Orten, an denen Unkräuter identifiziert worden sind, erfasst werden. Während sich das Schienenfahrzeug entlang einer Strecke bewegt, an der sich mindestens ein solcher Ort befindet, wird mittels eines Positionsbestimmungssystems (z.B. GPS-gestützt) die jeweilige Position des Schienenfahrzeugs überwacht. Nähert sich das Schienenfahrzeug einem solchen Ort, werden die notwendigen Vorkehrungen für eine Unkrautbekämpfung vorgenommen. Erkennt das Positionsbestimmungssystem, dass sich das Schienenfahrzeug an einem solchen Ort befindet, wird die Unkrautbekämpfungsmaßnahme ausgeführt.

Es ist aber auch denkbar, dass eine digitale Karte vorliegt, auf der Orte verzeichnet sind, an denen bestimmte Maßnahmen zur Unkrautbekämpfung nicht durchgeführt werden sollen.

Es ist zum Beispiel denkbar, dass in einigen Bereichen entlang einer Strecke aus Umwelt- oder Gewässerschutzgründen keine Ausbringung von Herbiziden erfolgen darf.

Ebenso ist es denkbar, dass an einigen Orten keine elektrische Energie verwendet werden darf, um Pflanzen abzutöten, zum Beispiel weil sich in der Nähe empfindliche elektrische oder elektronische Anlagen befinden, die durch die Anwendung von elektrischer Energie gestört oder geschädigt werden können.

Dementsprechend werden also diejenigen Orte angezeigt (identifiziert), an denen eine Unkrautbekämpfungsmaßnahme unterbrochen werden soll, während die Maßnahme an allen anderen Orten vorgenommen wird.

Die Erfindung wird nachstehend anhand von Figuren näher erläutert, ohne die Erfindung auf die in den Figuren gezeigten Merkmale und Merkmalskombinationen beschränken zu wollen.

Es zeigen:
Fig. 1 zeigt schematisch ein Schienenfahrzeug (10), das mit einer erfindungsgemäßen Vorrichtung ausgestattet ist.
Fig. 2 zeigt schematisch ein weiteres Schienenfahrzeug (10), das mit einer erfindungsgemäßen Vorrichtung ausgestattet ist.

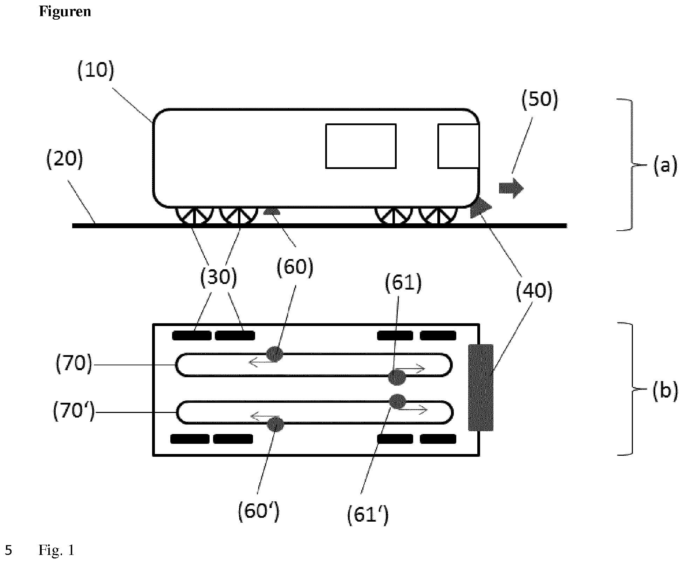

Das in Fig. 1 gezeigte Schienenfahrzeug (10) ist von einer Seite (a) und von unten (b) dargestellt. Es bewegt sich mittels Rädern (30) auf Schienen (20) in eine Richtung (50). Es ist ein Kamerasystem (40) vorhanden, mit dem das Gleisbett auf das Vorhandensein von Unkräutern untersucht werden kann. Falls Unkraut oder ein spezifisches Unkraut mittels des Kamerasystems identifiziert wird, wird ein Bekämpfungsmittel aktiviert. Im vorliegenden Fall erfolgt die Bekämpfung des Unkrauts durch die Applikation eines Herbizids. Das Herbizid wird über Sprühdüsen (60, 60', 61, 61') auf das Gleisbett appliziert. In der Figur 1 sind zwei Sprühdüsen (60, 60') gezeigt, die sich auf Schienen (70, 70') in eine Richtung bewegen, die der Bewegungsrichtung (50) des Schienenfahrzeugs (10) entgegengesetzt ist. Diese Sprühdüsen (60, 60') applizieren während ihrer Bewegung in die genannte Richtung Herbizid auf das Gleisbett. Die Sprühdüsen (61, 61') bewegen sich in dieser Zeit auf denselben Schienen (70, 70'), aber in die Richtung (50) des Schienenfahrzeugs und führen dabei keine Applikation von Herbizid aus. Erst dann, wenn sie über die Schienenbögen den jeweils äußeren Geradenabschnitt erreicht haben und eine Bewegung entgegen der Richtung (50) des Schienenfahrzeugs ausführen, führen sie eine Applikation eines Herbizids aus. Die Sprühdüsen (60, 60') bewegen sich dann auf den innen liegenden Geradenabschnitt in Richtung (50) des Schienenfahrzeugs und führen bei dieser Bewegung keine Applikation aus.

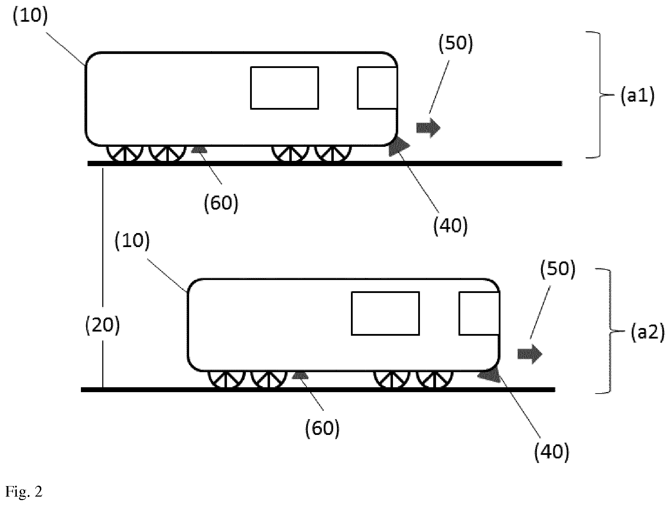

Das in Fig. 2 gezeigte Schienenfahrzeug (10) bewegt sich auf Schienen (20) in eine Richtung (50). Das Schienenfahrzeug ist mit Identifikationsmitteln (40) in Form einer Kamera ausgestattet. In der oberen Darstellung (a1) betrachtet die Kamera einen Gleisabschnitt in Fahrtrichtung (50). In der unteren Darstellung (a2) ist das Schienenfahrzeug zu einem späteren Moment gezeigt; es hat sich gegenüber der Position in der Darstellung (a1) ein Stück nach rechts bewegt. Während dieser Bewegung hat die Kamera (40) eine Schwenkbewegung entgegengesetzt zu der Bewegung des Schienenfahrzeugs (nach hinten) vollzogen; in der Darstellung (a2) ist die Kamera nach links gerichtet. Während der Schwenkbewegung nimmt die Kamera eine oder mehrere Bildaufnahmen von dem Gleisbett auf, um ein Unkraut zu identifizieren. Wird ein Unkraut identifiziert, wird eine Sprühdüse (60) veranlasst, ein Herbizid dann zu applizieren, wenn sich das Unkraut in der Applikationsreichweite der Sprühdüse befindet. Nach der Schwenkbewegung nach hinten, wird die Kamera eine Schwenkbewegung nach vorne in ihre Ausgangsposition vornehmen, um danach erneut nach hinten zu schwenken und so fort. Bei einem Schwenk nach vorne nimmt sie keine Bildaufnahmen auf. Vorzugsweise sind mehrere Kameras vorhanden, die abwechselnd von vorne nach hinten und zurück schwenken, wobei immer mindestens eine Kamera eine Schwenkbewegung entgegen der Bewegungsrichtung des Schienenfahrzeugs vornimmt und dabei eine oder mehrere Bildaufnahmen vom Gleisbett erzeugt, um Unkräuter zu identifizieren.

## Patentansprüche

1. Vorrichtung zur Unkrautbekämpfung für ein Schienenfahrzeug, umfassend
- Mittel zum Identifizieren mindestens eines Ortes entlang einer Strecke, an dem eine Maßnahme zur Unkrautbekämpfung durchgeführt werden soll, und
- Bekämpfungsmittel zur Unkrautbekämpfung an dem mindestens einen identifizierten Ort,
**dadurch gekennzeichnet, dass** die Mittel zum Identifizieren und/oder die Bekämpfungsmittel so hergerichtet sind, dass sie während der Fahrt des Schienenfahrzeugs eine Bewegung ausführen, die der Bewegungsrichtung des fahrenden Schienenfahrzeugs entgegengerichtet ist.

2. Vorrichtung gemäß Anspruch 1, wobei es sich bei den beweglich ausgeführten Bekämpfungsmitteln um Düsen handelt.

3. Vorrichtung gemäß Anspruch 1, wobei es sich bei den beweglich ausgeführten Bekämpfungsmitteln um Sprühdüsen zum Ausbringen eines oder mehrerer Herbizide handelt.

4. Vorrichtung gemäß Anspruch 1, wobei es sich bei den beweglich ausgeführten Bekämpfungsmitteln um Elektroden handelt, durch die bei Kontakt mit einer Pflanze ein elektrischer Strom zum Fließen gebracht werden kann, der zumindest teilweise durch Teile der Pflanze fließt.

5. Vorrichtung gemäß Anspruch 1, wobei es sich bei den beweglich ausgeführten Bekämpfungsmitteln um Mittel zum Aussenden von Strahlung in Richtung von Pflanzen, die sich auf der Gleisanlage befinden, handelt.

6. Vorrichtung gemäß einem der Ansprüche 1 bis 5, wobei es sich bei den beweglich ausgeführten Identifikationsmitteln um eine oder mehrere Kameras handelt, die mit einem Computersystem zur Analyse der Bilder verbunden ist/sind.

7. Verfahren umfassend die Schritte
- Bewegen eines Schienenfahrzeuges entlang einer Strecke in eine Bewegungsrichtung,
- Identifizieren mindestens eines Ortes, an dem eine Maßnahme zur Unkrautbekämpfung durchgeführt werden soll durch ein Identifikationsmittel zum Anzeigen des mindestens einen Ortes,
- Durchführung der Maßnahme zur Unkrautbekämpfung an dem mindestens einen Ort durch ein Bekämpfungsmittel zur Durchführung der Maßnahme zur Unkrautbekämpfung, **dadurch gekennzeichnet, dass** das Identifikationsmittel zum Anzeigen des mindestens einen Ortes und/oder das Bekämpfungsmittel zur Durchführung der Maßnahme zur Unkrautbekämpfung an dem mindestens einen Ort während des Bewegens des Schienenfahrzeugs eine Bewegung ausführen, die der Bewegungsrichtung des Schienenfahrzeugs entgegengesetzt ist.

8. Verfahren gemäß Anspruch 7, wobei sich das Schienenfahrzeug mit einer Geschwindigkeit von mindestens 30 km/h, vorzugsweise mindestens 40 km/h, noch mehr bevorzugt mindestens 50 km/h bewegt, während die Maßnahme zur Unkrautbekämpfung ausgeführt werden.

9. Verfahren gemäß einem der Ansprüche 7 bis 8, **dadurch gekennzeichnet, dass** die beweglich ausgeführten Identifikationsmittel und/oder Bewegungsmittel an einer Schiene gelagert sind und eine laterale Bewegung entgegengesetzt zur Bewegungsrichtung des Schienenfahrzeugs durchführen.

10. Verfahren gemäß Anspruch 9, **dadurch gekennzeichnet, dass** die Schiene in sich zurückführt.

11. Verfahren gemäß einem der Ansprüche 7 bis 10, **dadurch gekennzeichnet, dass** die beweglich ausgeführten Identifikationsmittel und/oder Bewegungsmittel an einem umlaufenden Träger befestigt sind und eine laterale Bewegung entgegengesetzt zur Bewegungsrichtung des Schienenfahrzeugs durchführen.

12. Verfahren gemäß einem der Ansprüche 7 bis 11, **dadurch gekennzeichnet, dass** die beweglich ausgeführten Identifikationsmittel und/oder Bewegungsmittel schwenkbar gelagert sind und eine Schwenkbewegung entgegengesetzt zur Bewegungsrichtung des Schienenfahrzeugs durchführen.

13. Verfahren gemäß einem der Ansprüche 7 bis 12, **dadurch gekennzeichnet, dass** die beweglich ausgeführten Identifikationsmittel und/oder Bewegungsmittel eine Rotationsbewegung durchführen, bei denen sich diejenigen Teile der Identifikationsmittel und/oder Bewegungsmittel, die dem Gleisbett am nächsten liegen, eine Bewegung entgegengesetzt zur Bewegungsrichtung des Schienenfahrzeugs durchführen.

14. Verfahren gemäß einem der Ansprüche 7 bis 13, **dadurch gekennzeichnet, dass** mehrere Identifikationsmittel und/oder Bewegungsmittel vorhanden sind, deren Bewegungen so aufeinander abgestimmt sind, dass immer mindestens ein Identifikationsmittel und/oder Bewegungsmittel vorhanden ist, dass eine Bewegung entgegengesetzt zur Bewegungsrichtung des Schienenfahrzeugs durchführt.

15. Schienenfahrzeug, umfassend eine oder mehrere Vorrichtungen nach einem der Ansprüche 1 bis 6.

## Claims

1. Apparatus for weed control for a rail vehicle, comprising
- means for identifying at least one location along a stretch of track, at which location a measure for weed control should be carried out, and
- control means for weed control at the at least one identified location,
**characterized in that** the identification means and/or the control means are set up such that, while the rail vehicle is travelling, they execute a movement which is directed opposite to the movement direction of the travelling rail vehicle.

2. Apparatus according to Claim 1, wherein the movably designed control means are nozzles.

3. Apparatus according to Claim 1, wherein the movably designed control means are spray nozzles for applying one or more herbicides.

4. Apparatus according to Claim 1, wherein the movably designed control means are electrodes through which an electric current can be made to flow upon contact with a plant, the said electric current flowing at least partially through parts of the plant.

5. Apparatus according to Claim 1, wherein the movably designed control means are means for emitting radiation in the direction of plants which are located on the track system.

6. Apparatus according to one of Claims 1 to 5, wherein the movably designed identification means are one or more cameras which is/are connected to a computer system for analyzing the images.

7. Method comprising the steps of
- moving a rail vehicle along a stretch of track in a movement direction,
- identifying at least one location at which a measure for weed control should be carried out by an identification means for displaying the at least one location,
- carrying out the measure for weed control at the at least one location by a control means for carrying out the measure for weed control,
**characterized in that**,
during the movement of the rail vehicle, the identification means for displaying the at least one location and/or the control means for carrying out the measure for weed control at the at least one location execute a movement which is opposite to the movement direction of the rail vehicle.

8. Method according to Claim 7, wherein the rail vehicle moves at a speed of at least 30 km/h, preferably at least 40 km/h, even more preferably at least 50 km/h, while the measure for weed control is executed.

9. Method according to either of Claims 7 and 8, **characterized in that** the movably designed identification means and/or movement means are mounted on a rail and carry out a lateral movement opposite to the movement direction of the rail vehicle.

10. Method according to Claim 9, **characterized in that** the rail forms a closed loop.

11. Method according to one of Claims 7 to 10, **characterized in that** the movably designed identification means and/or movement means are fastened to a circumferential support and carry out a lateral movement opposite to the movement direction of the rail vehicle.

12. Method according to one of Claims 7 to 11, **characterized in that** the movably designed identification means and/or movement means are pivotably mounted and carry out a pivoting movement opposite to the movement direction of the rail vehicle.

13. Method according to one of Claims 7 to 12, **characterized in that** the movably designed identification means and/or movement means carry out a rotation movement in the case of which those parts of the identification means and/or movement means which lie closest to the track bed carry out a movement opposite to the movement direction of the rail vehicle.

14. Method according to one of Claims 7 to 13, **characterized in that** there are a plurality of identification means and/or movement means, the movements of the said identification means and/or movement means being matched to one another such that there is always at least one identification means and/or movement means that carries out a movement opposite to the movement direction of the rail vehicle.

15. Rail vehicle comprising one or more apparatuses according to one of Claims 1 to 6.

## Revendications

1. Dispositif de désherbage destiné à un véhicule ferroviaire, ledit dispositif comprenant
- des moyens d'identification d'au moins un site le long d'un parcours où une mesure de désherbage doit être mise en œuvre, et
- des moyens de lutte pour le désherbage sur l'au moins un site identifié,
**caractérisé en ce que** les moyens d'identification et/ou les moyens de lutte sont préparés de façon à effectuer, pendant le déplacement du véhicule ferroviaire, un mouvement qui est opposé au sens de déplacement du véhicule ferroviaire en mouvement.

2. Dispositif selon la revendication 1, les moyens de lutte agencés de manière mobile étant des buses.

3. Dispositif selon la revendication 1, les moyens de lutte agencés de manière mobile étant des buses de pulvérisation destinées à appliquer un ou plusieurs herbicides.

4. Dispositif selon la revendication 1, les moyens de lutte agencés de manière mobile étant des électrodes par l'intermédiaire desquelles, lors du contact avec une plante, un courant électrique peut être amené à circuler, lequel circule au moins partiellement à travers des parties de la plante.

5. Dispositif selon la revendication 1, les moyens de lutte agencés de manière mobile étant des moyens destinés à émettre un rayonnement en direction des plantes qui sont situées sur les voies ferrées.

6. Dispositif selon l'une des revendications 1 à 5, les moyens d'identification agencés de manière mobile étant une ou plusieurs caméras reliées à un système informatique d'analyse des images.

7. Procédé comprenant les étapes suivantes
- déplacer un véhicule ferroviaire le long d'un parcours dans un sens de déplacement,
- identifier au moins un site, où une mesure de désherbage doit être mise en œuvre, à l'aide d'un moyen d'identification pour afficher l'au moins un site,
- mettre en œuvre la mesure de désherbage sur l'au moins un site à l'aide d'un moyen de lutte destiné à mettre en œuvre la mesure de désherbage,
**caractérisé en ce que**
le moyen d'identification destiné à afficher l'au moins un site et/ou le moyen de lutte destiné à mettre en œuvre la mesure de désherbage au niveau d'au moins un site effectuent un mouvement, opposé au sens de déplacement du véhicule ferroviaire, pendant le déplacement du véhicule ferroviaire.

8. Procédé selon la revendication 7, le véhicule ferroviaire se déplaçant à une vitesse d'au moins 30 km/h, de préférence d'au moins 40 km/h, de manière encore plus préférée d'au moins 50 km/h, pendant la mesure de désherbage.

9. Procédé selon l'une des revendications 7 et 8, **caractérisé en ce que** les moyens d'identification et/ou les moyens de déplacement agencés de manière mobile sont montés sur un rail et effectuent un mouvement latéral opposé au sens de déplacement du véhicule ferroviaire.

10. Procédé selon la revendication 9, **caractérisé en ce que** le rail revient sur lui-même.

11. Procédé selon l'une des revendications 7 à 10, **caractérisé en ce que** les moyens d'identification et/ou les moyens de déplacement agencés de manière mobile sont fixés à un support circonférentiel et effectuent un mouvement latéral opposé au sens de déplacement du véhicule ferroviaire.

12. Procédé selon l'une des revendications 7 à 11, **caractérisé en ce que** les moyens d'identification et/ou les moyens de déplacement agencés de manière mobiles sont montés de manière pivotante et effectuent un mouvement de pivotement opposé au sens de déplacement du véhicule ferroviaire.

13. Procédé selon l'une des revendications 7 à 12, **caractérisé en ce que** les moyens d'identification et/ou les moyens de déplacement agencés de manière mobiles effectuent un mouvement de rotation, pour lesquels les parties des moyens d'identification et/ou des moyens de déplacement, qui sont les plus proches du ballast, s'effectuent un mouvement opposé au sens de déplacement du véhicule ferroviaire.

14. Procédé selon l'une des revendications 7 à 13, **caractérisé en ce que** plusieurs moyens d'identification et/ou moyens de déplacement sont prévus dont les mouvements sont coordonnés entre eux de sorte qu'il y ait toujours au moins un moyen d'identification et/ou moyen de déplacement qui effectuent un mouvement opposé au sens de déplacement du véhicule ferroviaire.

15. Véhicule ferroviaire, comprenant un ou plusieurs dispositifs selon l'une des revendications 1 à 6.
